# EUROPEAN PATENT APPLICATION

(11) **EP 1 551 162 A2**
(43) Date of publication of application: **06.07.2005**
(21) Application number: 04029932.3
(22) Date of filing: 17.12.2004
(51) Int. Cl.: H04M 3/42, H04M 7/00, H04M 3/527, H04L 29/06, H04L 12/58

(54) **Call treatment in a communications system based on instant messaging**

(30) Priority: 31.12.2003 US 750795; 06.02.2004 US 542573 P; 12.10.2004 US 962773
(71) Applicant: ALCATEL, 75008 Paris (FR)
(72) Inventor: Ozugur, Timucin, TX 75042 Garland (US); Wengrovitz, Michael, 01742 Concord Massachusetts (US)
(74) Representative: Schäfer, Wolfgang, Dipl.-Ing.

(57) **Abstract**

An IM-based call treatment (IMBCT) system and method in a communications network environment. Upon establishing presence awareness among a plurality of networked entities, a call treatment profile having a number of treatment options is provided for a particular networked party based on presence information. When an incoming communication request intended for the particular networked party is received and that particular networked party is unavailable, a IMBCT functionality is operable to forward an IM that includes call treatment options to the calling party. Upon selection of a specific treatment option by the calling party, a treatment is provided relative to the communication request responsive to the selection.

## Description

### BACKGROUND OF THE INVENTION

### Technical Field of the Invention

The present invention generally relates to presence-aware communication networks. More particularly, and not by way of any limitation, the present invention is directed to call treatment in a communications system based on instant messaging.

### Description of Related Art

With today's widespread use of the Internet as a major communication medium, data communication devices are now being designed so that they are capable of communicating over packet-switched networks. For instance, telephones, pagers, personal digital assistant devices, cell phones, handheld computers, and even fax machines can now be accessed and controlled from the Internet. Communication over a packet-switched network using communication devices that traditionally communicate over a circuit-switched telecommunications network is generally known as network telephony, or IP telephony when an IP network is involved.

Various types of user communication devices (e.g., a cell phone, laptop or handheld PC, desktop PC, and the like) can identify themselves to the network using a suitable identifier (e.g., username@company.com). "Presence" refers to, for example, the availability, proximity, activity level or operating state of a user or device on a network. The ability for users to monitor each other's presence is a feature offered in connection with many applications that support network telephony. For example, instant messaging (IM) applications such as MSN®, Yahoo®, et cetera, have an "available buddy" feature, in which a user of the application can determine whether select users are available for engaging in communication. The data retrieved and returned to the buddy list, e.g. "John OFFLINE" or "Susan ACTIVE", is known as "presence information," and is generally maintained by a presence server in the data network, often a dedicated server. Typically, the presence server supports network protocols such as the Session Initiation Protocol (SIP). Users can register their communication devices with the presence server in order to have their presence maintained and to allow various programs on the network to facilitate network telephony services. A first device user wishing to detect the presence of a second device user does so by "subscribing" with the presence server, such as via a SIP SUBSCRIBE message. The presence server intermediates between the first device user (also known as the watcher or subscriber) and the second device user to facilitate the communication of the second device user's presence information to the first device user.

Additional details concerning presence and presence data modeling are set forth in the Internet Engineering Task Force (IETF) Request for Comment (RFC) 2778 entitled "A model for Presence and Instant Messaging," dated February 2002; RFC 2779 entitled "Instant Messaging / Presence Protocol Requirements," dated February 2002; and Internet-Draft identified as <<draft-schulzrinne-simple-rpids-01.ps>> and entitled "RPIDS - Rich Presence Information Data Format for Presence Based on the Session Initiation Protocol (SIP)," dated February 18, 2003, which are incorporated herein by reference.

Although presence applications have been implemented in a variety of settings such as those exemplified hereinabove, several areas remains deficient in terms of presence and customization of call treatment using presence information.

### SUMMARY OF THE INVENTION

According to one embodiment, an IM-based call treatment (IMBCT) system and method operable in a communications network environment is disclosed. Upon establishing presence awareness among a plurality of networked entities, a call treatment profile having a number of treatment options is provided for a particular networked party based on presence information. When an incoming communication request intended for the particular networked party is received and that particular networked party is unavailable, a IMBCT functionality is operable to forward an IM that includes call treatment options to the calling party. Upon selection of a specific treatment option by the calling party, a treatment is provided relative to the communication request responsive to the selection.

In one aspect, the present invention is directed to a routing method based on call treatment options provided in a communications network environment. Initially, presence awareness is established among a plurality of networked parties, wherein each party is provided with a first communication device operably coupled to a first network and with a second communication device operably coupled to a second network, the second network operating to facilitate communication of presence information relating to the networked parties. A call treatment profile is provided with respect to an incoming communication request for a particular networked party based on the presence information. Upon receiving a communication request from an originating party, e.g., a customer requesting service from a call center, over the first network, wherein the communication request is intended to be directed to the particular networked party, an instant message is generated to the originating party that includes at least a portion of the call treatment profile having a number of options. A response is generated by the originating party that is responsive to the instant message, whereupon a particular call treatment is provided relative to the communication request based on the response. In one embodiment, the response by the originating party includes providing a reply instant message by the originating party to the particular networked party, wherein the reply instant message comprises a selected call routing option relative to the communication request, e.g., selecting another networked party that has been established as a contact for the particular networked party.

In another aspect, the present invention is directed to a routing system based on call treatment options provided in a communications network environment. A suitable presence application is provided for establishing presence awareness among a plurality of networked parties, wherein each party is provided with a first communication device operably coupled to a first network and with a second communication device operably coupled to a second network, the second network operating to facilitate communication of presence information relating to the networked parties. A database and logic structure module is provided for supporting a call treatment profile for a particular networked party based on the presence information, wherein the call treatment profile includes a list of contacts selected from at least a portion of remaining networked parties. Logic structure is included for generating an instant message to an originating party that includes at least a portion of the call treatment profile, upon receiving a communication request from the originating party over the first network wherein the communication request is intended to be directed to the particular networked party that is unavailable. Responsive to a response message generated by the originating party, routing logic structure is operable for providing a treatment relative to the communication request. In one embodiment, the response message by the originating party includes providing a reply instant message by the originating party to the particular networked party, wherein the reply instant message comprises a selected call routing option relative to the communication request, e.g., selecting another networked party that has been established as a contact for the particular networked party. The routing logic structure accordingly provides a command to a network switch in order for forwarding the communication request to the selected contact.

In yet another aspect, the present invention is directed to a system for routing calls based on treatment options provided via instant messaging. A plurality of phones are interconnected to form a phone network, e.g., an enterprise phone network, wherein a select phone is provided with an instant messaging call treatment function that transmits an instant message to a caller when the select phone is set to an unavailable status, the instant message including a set of call treatment options relative to an incoming call from the caller. A routing manager is provided that is operable responsive to a reply instant message generated by the caller, the reply instant message including a particular call treatment option selected by the caller, wherein a forwarding command is provided by the routing manager to a switch associated with the phone network in accordance with the particular call treatment option selected by the caller.

### BRIEF DESCRIPTION OF THE DRAWINGS

The accompanying drawings are incorporated into and form a part of the specification to illustrate one or more presently preferred exemplary embodiments of the present invention. Various advantages and features of the invention will be understood from the following Detailed Description taken in connection with the appended claims and with reference to the attached drawing figures in which:

FIG. 1 depicts an embodiment of a communications network environment wherein a communication request can be re-routed based on treatment options provided in accordance with an aspect of the present invention;

FIG. 2 depicts a functional block diagram of a computing/communication device having the IM-based call treatment (IMBCT) functionality according to an embodiment of the present invention;

FIG. 3 is a flow chart of the operations involved in an embodiment of the call treatment methodology of the present invention;

FIG. 4 depicts a message flow diagram for implementing an exemplary enterprise-level embodiment of the IM-based call treatment methodology according to an aspect of the present invention;

FIG. 5 depicts a screen shot rendition associated with an exemplary embodiment relative to the present invention; and

FIGS. 6A and 6B depict renditions of screen shots associated with two exemplary IM-based call treatment option profiles provided in accordance with an aspect of the present invention.

### DETAILED DESCRIPTION OF THE DRAWINGS

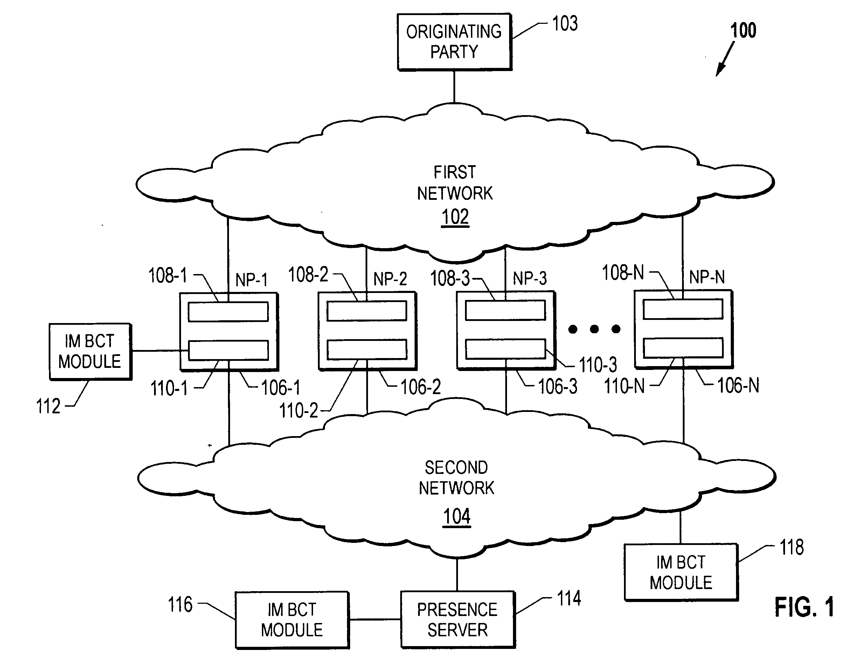

Embodiments of the invention will now be described with reference to various examples of how the invention can best be made and used. Like reference numerals are used throughout the description and several views of the drawings to indicate like or corresponding parts, wherein the various elements are not necessarily drawn to scale. Referring now to the drawings, and more particularly to FIG. 1, depicted therein an embodiment of a communications network environment 100 wherein a communication event or a request relating thereto can be re-routed based on call treatment options provided in accordance with an aspect of the present invention. As illustrated, the communications network environment 100 is comprised of a first network 102 and a second network 104, wherein an originating party 103, i.e., a caller, is operable to initiate the communication event request (or, simply "communication request" or "request") over one of the networks, e.g., the first network 102, for delivery to an intended networked party that is networked to both first and second networks. By way of example, a plurality of networked parties NP-1 106-1 through NP-N 106-N are operable to access the first network 102, each using a suitable first communication device, 108-i, i = 1, 2, ..., N. Likewise, NP-1 106-1 through NP-N 106-N are also operable to access the second network 102, each using a suitable second communication device 110-i, i = 1, 2, ..., N.

At the outset, it should be realized by those skilled in the art that for purposes of the present invention, the first and second networks may comprise any known or heretofore unknown telecommunications or data communications networks, either private or public, as long as one of them, e.g., the second network 104, is capable of operating as a presence-aware network. Accordingly, the first network 102 can be a network selected from the group consisting of an enterprise communications network, e.g., a digital Private Branch Exchange (PBX) network, at least a portion of a public circuit-switched voice communications network such as the Public Switched Telephone Network (PSTN), or a packet-switched network, e.g., an Internet Protocol (IP)-based network. In terms of the type of communications that can be supported, it is envisaged that the first network 102 is capable of supporting voice communications, video communications, data communications, text message communications, electronic mail (email) communications, multimedia communications, or any combination or combinations thereof. As a consequence, the term "call" or "communication request" used in reference to a communication event initiated by the originating party 103 should be construed broadly and can include any communication event relating to the communication types exemplified herein (e.g., voice calls, video calls, text messages, email messages, video mail messages, multimedia calls, et cetera). Correspondingly, the first communication devices 108-1 to 108-N associated with the networked parties may comprise wireline telephones, wireless telephones, PBX digital phones, video phones, text messaging devices, Voice-over-IP (VoIP) or web phones, and the like, depending on particular network implementation and application.

As alluded to in the foregoing, the second network 104 is preferably operable as a presence-aware network wherein presence information relating to the networked parties and associated communication devices may be collected and shared using any presence-capable network protocol. By way of example, the second network may be implemented as an IP-based network that is operable with a presence application protocol selected from the group consisting of SIP, Extensible Messaging and Presence Protocol (XMPP), IBM Sametime protocol, and so on. Furthermore, the second network 104 may comprise a local area network, wide area network, an enterprise intranet network, or a public packet-switched network such as the Internet. Accordingly, the second communication devices 110-1 to 110-N associated with the networked parties may comprise a computing/communication device such as, e.g., a desktop or laptop personal computer, although any hardware platform operable with a presence application may be provided as part of the second network 104 within the context of the present invention. Additionally, in a further embodiment, the first and second communication devices associated with a networked party may be integrated into a single device, e.g., equipment that supports computer telephony integration (CTI), with which the networked parties may access both first and second networks. For instance, additional details regarding integration of PBX phones and presence-capable computer equipment may be found in the following co-pending commonly assigned United States nonprovisional patent application entitled: "CLIENT-BASED INTEGRATION OF PBX AND MESSAGING SYSTEMS," Application No.: 10/750,795, filed December 31, 2003, in the name(s) of Michael S. Wengrovitz, cross-referenced hereinabove.

To facilitate presence information collection and sharing, a presence server 114 may be provided as part of the second network 104. In one embodiment, the presence information relates to the presence state/data of the networked parties and associated communication devices (e.g., "OFFLINE"; "ONLINE"; "OUT TO LUNCH"; "BUSY"; "IDLE"; "ON PHONE"; "IN CONFERENCE"; "WITH CUSTOMER"; "KEYBOARD INACTIVE"; "CALL WAITING"; "OFF-HOOK"; "RINGING", et cetera) that is helpful in determining whether a networked party or its communication device is available for establishing a connection with respect to an incoming communication request generated by the originating party 103. As will be seen in detail below, such presence information may determine various call treatment options that may be provided as part of a call treatment profile associated with a particular networked party. IM-based call treatment (IMBCT) logic may be provisioned in the communications network environment 100 either in a centralized manner (e.g., as a separate network node or as a co-located module associated with a network switch or a presence server) or by way of a distributed arrangement wherein the IMBCT logic may be partitioned across one or more network entities, i.e., communication devices associated with the networked parties, or in any combination thereof. As shown in FIG. 1, IMBCT module 112 is illustrative of an embodiment where the IMBCT logic is provided as an application operating in conjunction with the computing/communication device 110-1 of one particular networked party, i.e., NP-1 106-1. IMBCT module 116 exemplifies the provisioning of the IMBCT logic as a co-located entity operable in conjunction with the presence server 114. On the other hand, IMBCT module 118 exemplifies the provisioning of the IMBCT logic as a separate network node disposed in the second network 104. Although not explicitly shown in FIG. 1, those skilled in the art will recognize that the IMBCT functionality may also be provisioned as part of a network switch associated with the first network 102 (e.g., as a CTI-enhanced PBX node).

Regardless of where or how the IMBCT logic is provisioned in the communications network environment 100, the logic is operable to facilitate the generation of an IM that includes a number of call treatment options with respect to any incoming communication request, mediated through presence information as well as user preferences and options. In one embodiment, the IMBCT logic is operable responsive to an incoming communication request that is intended to be directed to a particular networked party (e.g., NP-1 106-1) that is unavailable for some reason. When it is detected or designated that NP-1 106-1 is busy or otherwise unavailable, the IMBCT logic generates an IM towards the originating party, which IM includes a plurality of treatment options selectable by the originating caller party. Also, a set of user preferences configurably associated with NP-1 106-1 may be interfaced with the IMBCT logic so as to further refine the various treatment options that may be provided as part of the IM to the originating party. By selecting a particular treatment option, which is transmitted back to the IMBCT logic in a response message, the originating party can therefore influence how its call may be treated within the communications network environment 100. Responsive to the response message from the originating party, which can be a reply IM in one embodiment, the IMBCT logic provides appropriate signaling so that a call treatment is effectuated relative to the communication request. For example, the originating party may select a call forwarding option whereby the communication request is to be forwarded to a contact established as part of the treatment profile of the intended particular networked party, i.e., NP-1 106-1. Those skilled in the art will readily recognize that the re-routing process may be facilitated via one or more switching nodes associated with the first network 102 (e.g., a PBX in an enterprise network such as a call center network) over which the communication request is received, although the communication request may have been originated in a separate network altogether. Additionally, it should be further appreciated that the overall IMBCT functionality in conjunction with contact selection and/or user preference mediation is amenable to numerous applications, configurations, modifications, enhancements, et cetera. As a simple example, the user preferences associated with NP-1 106-1 may be predetermined or dynamically defined, and may comprise call treatment options based on the contents/type/nature of the incoming communication request, day/date/time stamp information of the request, identity of the originating party, and so on. Determination of contact members for NP-1 106-1 may be effectuated automatically or manually, and a suitable contact selection logic may be employed that involves multi-level resolutions resulting in a hierarchical, prioritized decision-making process. Additional details, for instance, regarding selection of multiple contacts among a plurality of networked entities may be found in the following co-pending commonly assigned United States nonprovisional patent application entitled: "PRESENCE-BASED ROUTING IN A COMMUNICATIONS NETWORK ENVIRONMENT," filed , Attorney Docket No. 1285-0145US, in the name(s) of: Timucin Ozugur and Michael S. Wengrovitz, cross-referenced hereinabove.

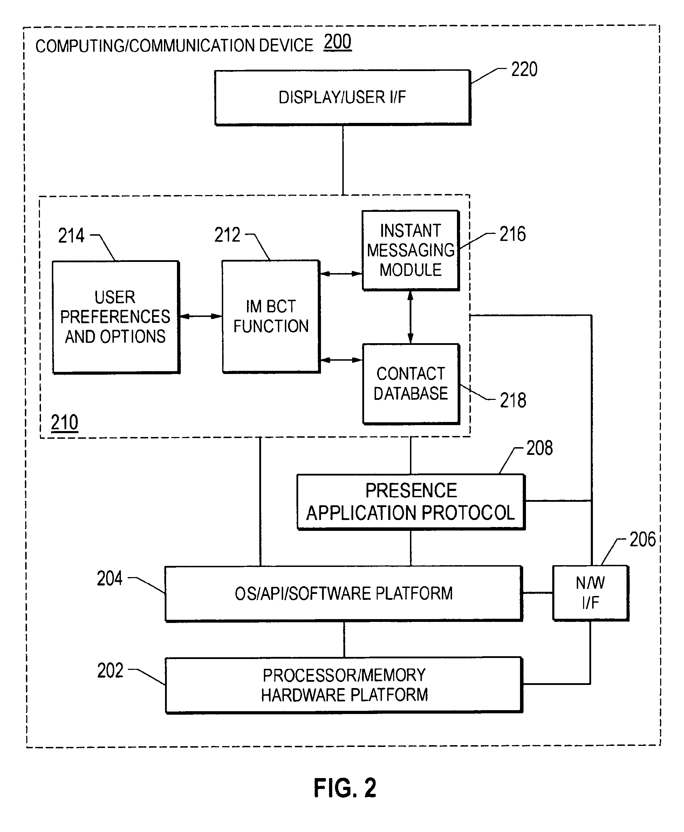

FIG. 2 depicts a functional block diagram of a computing/communication device 200 having the IMBCT functionality according to an embodiment of the present invention. By way of implementation, device 200 may be provided as a communication device associated with a networked party for accessing the presence-aware network 104 of the communications network environment 100 described above. A processor/memory block 202 having any known or heretofore unknown architecture forms the hardware platform of the device 200. Operable thereon is a software platform 204 comprising an Operating System (OS) and suitable suite of application programming interfaces (APIs). Also provided is a network interface 206 for effectuating communication over the presence-aware network as well as instant messaging. A presence application protocol module 208 is illustrative of a network protocol stack (e.g., a SIP stack) adapted for transmitting and receiving presence information.

A IMBCT module 210 includes a routing logic function 212 that is operably coupled to an instant messaging (IM) module 216 (e.g., representative of known IM applications operable to provide IM services), a contact list or database 218 and a database of user preferences and options 214. As alluded to in the foregoing discussion, the contact selection logic 216 may be dynamically configurable, and can involve real-time input from the user (i.e., the networked party intending to re-route communication requests). In addition, the user preferences/options database 214 and contact list database 218 may be populated, updated, and maintained in a number of ways. A display and/or user interface 222 is provided for supporting appropriate GUI-based dialog boxes and menus that facilitate user interaction.

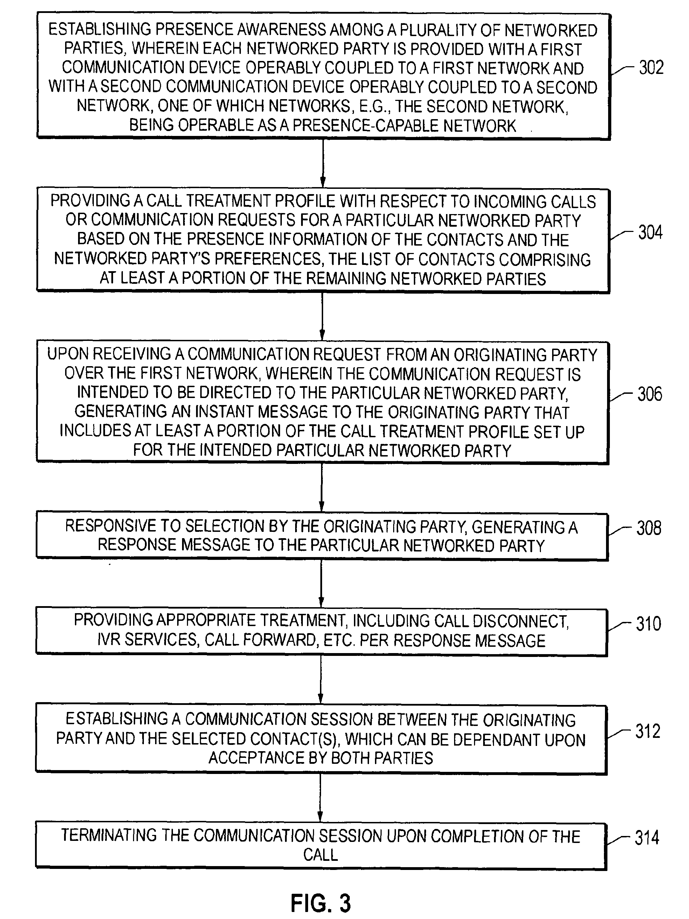

FIG. 3 is a flow chart of the operations involved in an embodiment of the call treatment methodology of the present invention. Initially, presence awareness is established among a plurality of networked parties, wherein each networked party is provided with a first communication device operably coupled to a first network and with a second communication device operably coupled to a second network, one of which networks, e.g., the second network is being operable as a presence-capable network (block 302). A call treatment profile is provided for a particular networked party with respect to incoming calls directed thereto, wherein the treatment profile includes caller-selectable options based on the presence information of the contacts and the networked party's call treatment preferences/options (block 304). Upon receiving a communication request from an originating party over the first network, wherein the communication request is intended to be directed to the particular networked party, the IMBCT functionality is operable to generate an IM to the originating party that includes at least a portion of the call treatment profile associated with the particular networked party (block 306).

Responsive to the selection by the originating party, a response message is generated thereby that is transmitted to the IMBCT functionality of the particular networked party. Depending on the selection, the response may include a IM-based request that the communication request be routed or re-routed to a party other than the intended particular networked party. In other instances, the originating party may simply request access to a voice recording system (e.g., an interactive voice recording (IVR) service), or may simply disconnect. Regardless, responsive to the response message by the originating party, a treatment relative to the communication request is provided, which in one case may involve forwarding the call to another party, i.e., a selected contact. These actions are consolidated at blocks 308 and 310. Also, as a further variation, another instant message may be directed to the selected contact or contacts that an incoming communication request is being routed thereto. A communication event/session pursuant to the incoming communication request may then be established between the originating party and the selected contact(s), which can be conditionally dependent upon acceptance by both parties (block 312). The communication session is subsequently terminated upon completion of the communication event (block 314).

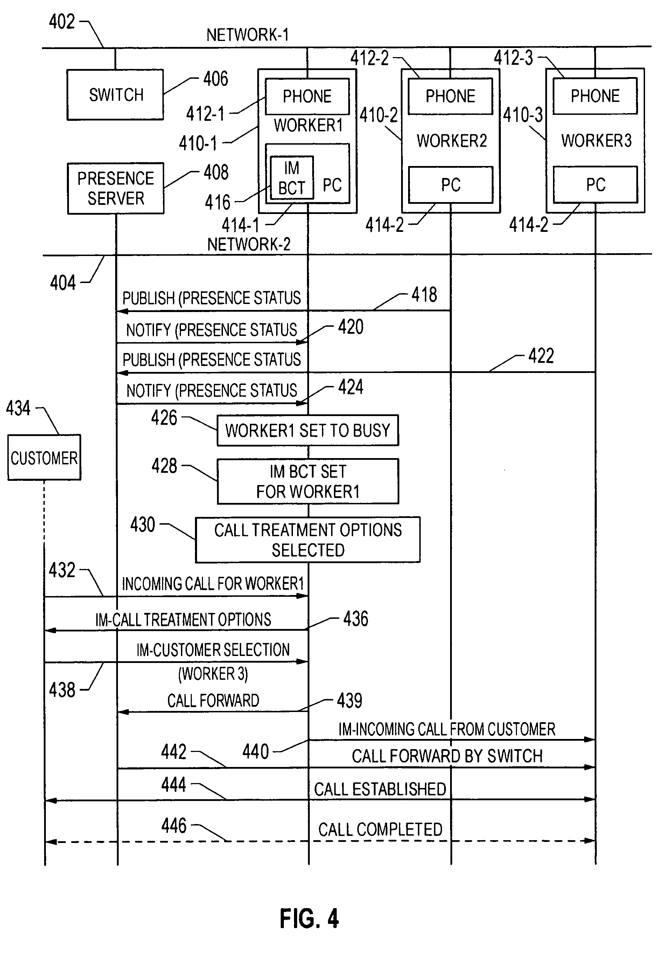

FIG. 4 depicts a message flow diagram for implementing an exemplary enterprise-level embodiment of the IM-based call treatment methodology according to one aspect of the present invention, wherein three networked parties, Worker1 410-1, Worker2 410-2 and Worker3 410-3 are exemplified. Network-1 402 including a switch 406 is provided to be an enterprise-level digital phone network, e.g., a PBX network having a PBX switch, wherein each of the networked parties is equipped with a PBX phone. Reference numerals 412-1, 412-2 and 412-3 refer to the three phones associated with Workers 410-1, 410-2 and 410-3, respectively. Network-2 404 including a presence server 408 is operable as the enterprise's IP-based network adapted for collecting, communicating and establishing presence information, wherein each networked party is equipped with a personal computer (PC) for interfacing with Network-2 404. In particular, reference numerals 414-1, 414-2 and 414-3 refer to the three IM-capable PCs associated with Workers 410-1, 410-2 and 410-3, respectively, where Worker1's PC 414-1 is also equipped with a routing logic module 416 that is operable to execute the IMBCT functionality discussed above.

As part of establishing presence awareness in the network, Workers publish their presence status to the presence server 408 by means of suitable messaging. In response thereto, the presence server 408 provides presence status information to the watcher, which in this scenario is Worker1 410-1. As illustrated, Worker2 410-2 and Worker3 410-3 who provide their presence status via PUBLISH 418 and PUBLISH 422 messages are deemed to be contacts for Worker1 410-1. NOTIFY messages 420, 424 are provided to Worker1 410-1 by the presence server 408 for establishing presence awareness.

Thereafter, presence status associated with Worker1 410-1 is set to busy (to signify unavailability) as indicated by reference numeral 426. As part of activating and configuring the IMBCT logic for Worker1 410-1, appropriate call treatment profile is established therefor which includes various call treatment options that can be customized as alluded to before. Reference numerals 428 and 430 refer to these actions, respectively.

When an incoming call 432 (originated by customer 434) is received in Network-1 402 for Worker1 410-1, IMBCT module 416 transmits an IM 436 including the call treatment options to the originating party 434. Responsive thereto, a reply IM 438 is generated by the originating party towards Worker1 410-1, which reply IM includes a call treatment selection, for example, forwarding the communication request to another party, such as Worker3 410-3. Responsive thereto, a call forwarding command 439 is provided by IMBCT module 416 to the switch 406 in order to effectuate the selected call treatment option. Also, IMBCT module 416 may generate another IM 440 towards the selected contact, i.e., Worker3 410-3, that a call originated by the originating party 434 is being forwarded thereto. Responsive to the call forward command 439, switch 406 effectuates the re-routing of the call to Worker3 410-3 as indicated by reference numeral 442. Thereafter, a call session 444 is established between Worker3 410-3 and the originating party. Subsequent to completion of the call, the call session may be terminated as indicated by reference numeral 446.

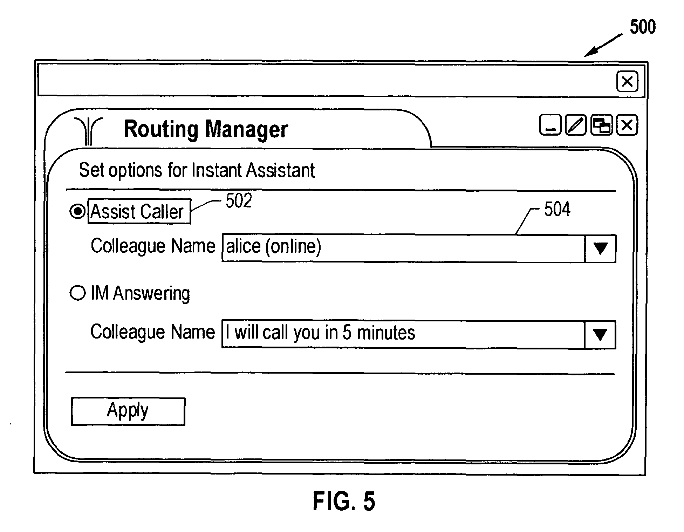

FIG. 5 depicts a screen shot associated with an exemplary embodiment according to an aspect of the present invention, wherein the IMBCT logic is implemented as a routing manager associated with a phone, PC, or an integrated communication device, disposed in an enterprise network. Reference numeral 500 refers to a GUI-based dialog box provided for activating the IMBCT logic, referred to as "Assist Caller" menu 502. Menu 504 is provided for facilitating selection of one or more contacts that are provided as part of the treatment profile. A particular contact can be selected from a list of contacts whose presence information is made available to the IMBCT functionality.

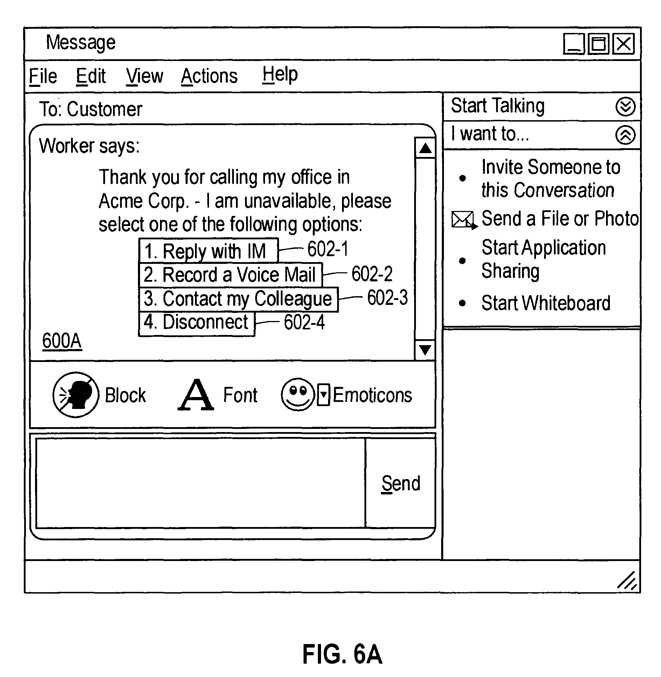

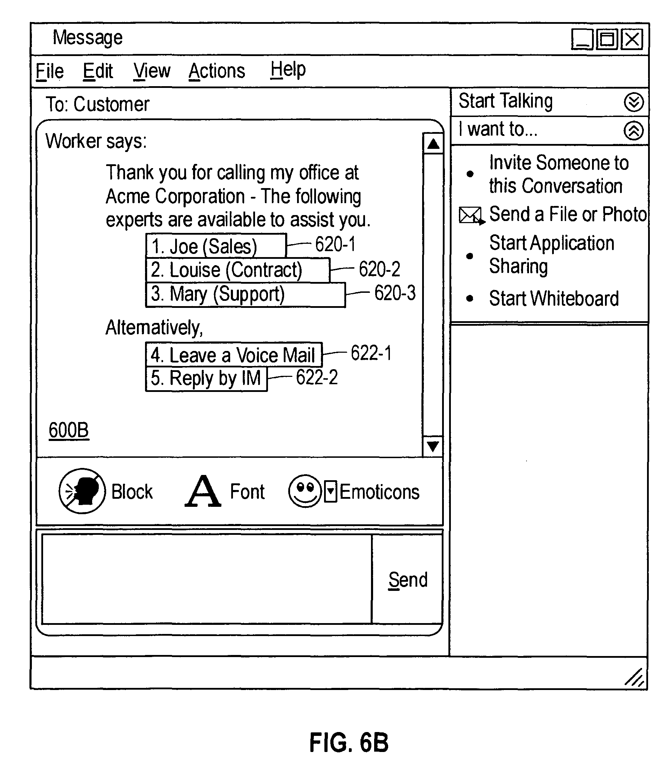

FIGS. 6A and 6B depict screen shots associated with two exemplary IM-based call treatment option profiles provided in accordance with an aspect of the present invention. As shown in the IM embodiment 600A, a number of treatment options are provided to the customer for selection, e.g., REPLY WITH IM option 602-1, RECORD A VOICE MAIL option 602-2, CONTACT MY COLLEAGUE option 602-3, and DISCONNECT option 602-4. Advanced options may be provided as illustrated in the IM embodiment 600B where specific knowledge-based contacts can be selected by the customer, in addition to IVR services, DISCONNECT options, et cetera. Options identified with reference numerals 620-1 to 620-3; 622-1 and 622-2 are shown by way of example.

The following method/s and/or method steps as well as the following system/s and/or system features, separately or in any combination, also constitute advantageous embodiments of the claimed and/or described invention:
- The claimed and/or described routing method based on call treatment options provided in a communications network environment, wherein said IP-based network comprises a local area network operable with a protocol selected from the group consisting of Session Initiation Protocol (SIP), Extensible Messaging and Presence Protocol (XMPP) and IBM Sametime protocol;
- The claimed and/or described routing method based on call treatment options provided in a communications network environment, wherein said IP-based network comprises a wide area network operable with a protocol selected from the group consisting of Session Initiation Protocol (SIP), Extensible Messaging and Presence Protocol (XMPP) and IBM Sametime protocol;
- The claimed and/or described routing method based on call treatment options provided in a communications network environment, wherein said IP-based network comprises an enterprise intranet network operable with a protocol selected from the group consisting of Session Initiation Protocol (SIP), Extensible Messaging and Presence Protocol (XMPP) and IBM Sametime protocol;
- The claimed and/or described routing method based on call treatment options provided in a communications network environment, wherein said IP-based network comprises a public packet-switched network operable with a protocol selected from the group consisting of Session Initiation Protocol (SIP), Extensible Messaging and Presence Protocol (XMPP) and IBM Sametime protocol;
- The claimed and/or described routing method based on call treatment options provided in a communications network environment, wherein said communication request is related to at least one of voice communication, video communication, data communication, text message communication, electronic mail communication, and multimedia communication;
- The claimed and/or described routing method based on call treatment options provided in a communications network environment, wherein said call treatment profile includes an option for recording a voice message by said originating party;
- The claimed and/or described routing method based on call treatment options provided in a communications network environment, wherein said call treatment profile is based on contents of said communication request;
- The claimed and/or described routing method based on call treatment options provided in a communications network environment, wherein said call treatment profile is based on date stamp of said communication request;
- The claimed and/or described routing method based on call treatment options provided in a communications network environment, wherein said call treatment profile is based on time stamp of said communication request;
- The claimed and/or described routing method based on call treatment options provided in a communications network environment, wherein said call treatment profile is based on identity of said originating party;
- The claimed and/or described routing method based on call treatment options provided in a communications network environment, wherein said call treatment profile is dynamically configurable;
- The claimed and/or described routing method based on call treatment options provided in a communications network environment, wherein said call treatment profile is established automatically;
- The claimed and/or described routing method based on call treatment options provided in a communications network environment, wherein said call treatment profile is established manually;
- The claimed and/or described routing method based on call treatment options provided in a communications network environment, wherein said call treatment profile is updated periodically;
- A routing system based on call treatment options provided in a communications network environment, comprising: means for establishing presence awareness among a plurality of networked parties, wherein each party is provided with a first communication device operably coupled to a first network and with a second communication device operably coupled to a second network, said second network operating to facilitate communication of presence information relating to said networked parties; database and logic structure means for supporting a call treatment profile for a particular networked party based on said presence information, wherein said call treatment profile includes a list of contacts selected from at least a portion of remaining networked parties; means for generating an instant message to an originating party that includes at least a portion of said call treatment profile upon receiving a communication request from said originating party over said first network, wherein said communication request is intended to be directed to said particular networked party; and means for providing a treatment relative to said communication request based on a reply response generated by said originating party;
- The claimed and/or described routing system based on call treatment options provided in a communications network environment, wherein said reply response generated by said originating party includes a reply instant message by said originating party to said particular networked party, said reply instant message comprising a selected call routing option relative to said communication request;
- The claimed and/or described routing system based on call treatment options provided in a communications network environment, wherein said selected call routing option relative to said communication request is comprised of forwarding said communication request to a selected contact included as part of said call treatment profile;
- The claimed and/or described routing system based on call treatment options provided in a communications network environment, further comprising means for generating a instant message to said selected contact that said communication request is being forwarded thereto;
- The claimed and/or described routing system based on call treatment options provided in a communications network environment, wherein said first network comprises a network selected from the group consisting of a Private Branch Exchange (PBX) network, a Public Switched Telephone Network (PSTN) and an Internet Protocol (IP)-based network;
- The claimed and/or described routing system based on call treatment options provided in a communications network environment, wherein said first communication device comprises a device selected from the group consisting of wireline telephones, wireless telephones, PBX digital phones, video phones, text messaging devices, and Voice-over-IP (VoIP) phones;
- The claimed and/or described routing system based on call treatment options provided in a communications network environment, wherein said second network comprises a Internet Protocol (IP)-based network;
- The claimed and/or described routing system based on call treatment options provided in a communications network environment, wherein said IP-based network comprises a local area network operable with a protocol selected from the group consisting of Session Initiation Protocol (SIP), Extensible Messaging and Presence Protocol (XMPP) and IBM Sametime protocol;
- The claimed and/or described routing system based on call treatment options provided in a communications network environment, wherein said IP-based network comprises a wide area network operable with a protocol selected from the group consisting of Session Initiation Protocol (SIP), Extensible Messaging and Presence Protocol (XMPP) and IBM Sametime protocol;
- The claimed and/or described routing system based on call treatment options provided in a communications network environment, wherein said IP-based network comprises an enterprise intranet network operable with a protocol selected from the group consisting of Session Initiation Protocol (SIP), Extensible Messaging and Presence Protocol (XMPP) and IBM Sametime protocol;
- The claimed and/or described routing system based on call treatment options provided in a communications network environment, wherein said IP-based network comprises a public packet-switched network operable with a protocol selected from the group consisting of Session Initiation Protocol (SIP), Extensible Messaging and Presence Protocol (XMPP) and IBM Sametime protocol;
- The claimed and/or described routing system based on call treatment options provided in a communications network environment, wherein said communication request is related to at least one of voice communication, video communication, data communication, text message communication, electronic mail communication, and multimedia communication;
- The claimed and/or described routing system based on call treatment options provided in a communications network environment, wherein said call treatment profile includes an option for recording a voice message by said originating party;
- The routing system based on call treatment options provided in a communications network environment, wherein said call treatment profile is based on contents of said communication request;
- The claimed and/or described routing system based on call treatment options provided in a communications network environment, wherein said call treatment profile is based on date stamp of said communication request;
- The claimed and/or described routing system based on call treatment options provided in a communications network environment, wherein said call treatment profile is based on time stamp of said communication request;
- The claimed and/or described routing system based on call treatment options provided in a communications network environment, wherein said call treatment profile is based on identity of said originating party;
- The claimed and/or described routing system based on call treatment options provided in a communications network environment, wherein said call treatment profile is dynamically configurable;
- The claimed and/or described routing system based on call treatment options provided in a communications network environment, wherein said call treatment profile is established automatically;
- The claimed and/or described routing system based on call treatment options provided in a communications network environment, wherein said call treatment profile is established manually;
- The claimed and/or described routing system based on call treatment options provided in a communications network environment, wherein said call treatment profile is updated periodically;
- The claimed and/or described system for routing calls based on treatment options provided via instant messaging, wherein said call treatment options are established automatically;
- The claimed and/or described system for routing calls based on treatment options provided via instant messaging, wherein said call treatment options are established manually;
- The claimed and/or described system for routing calls based on treatment options provided via instant messaging, wherein said call treatment options are updated periodically.

Based on the foregoing Detailed Description, it should be appreciated that the present invention advantageously provides an IM-based call treatment mechanism that enhances caller control as well as supports customization by a called party in a networked environment. Value propositions such as efficient re-routing, servicing calls based on contact member expertise, etc., may be enabled, particularly in enterprises such as call centers and the like.

Although the invention has been described with reference to certain exemplary embodiments, it is to be understood that the forms of the invention shown and described are to be treated as exemplary embodiments only. Accordingly, various changes, substitutions and modifications can be realized without departing from the spirit and scope of the invention as defined by the appended claims.

## Claims

1. A routing method based on call treatment options provided in a communications network environment, comprising:
establishing presence awareness among a plurality of networked parties, wherein each party is provided with a first communication device operably coupled to a first network and with a second communication device operably coupled to a second network, said second network operating to facilitate communication of presence information relating to said networked parties;
providing a call treatment profile with respect to an incoming communication request for a particular networked party based on said presence information;
upon receiving a communication request from an originating party over said first network, wherein said communication request is intended to be directed to said particular networked party, generating an instant message to said originating party that includes at least a portion of said call treatment profile;
generating a response by said originating party that is responsive to said instant message; and
providing a treatment relative to said communication request based on said response.

2. The routing method based on call treatment options provided in a communications network environment as recited in claim 1, wherein said response by said originating party includes providing a reply instant message by said originating party to said particular networked party, said reply instant message comprising a selected call routing option relative to said communication request.

3. The routing method based on call treatment options provided in a communications network environment as recited in claim 2, wherein said selected call routing option relative to said communication request is comprised of forwarding said communication request to a selected contact included as part of said call treatment profile.

4. The routing method based on call treatment options provided in a communications network environment as recited in claim 3, further comprising the operation of generating a instant message to said selected contact that said communication request is being forwarded thereto.

5. The routing method based on call treatment options provided in a communications network environment as recited in claim 2, wherein said first network comprises a network selected from the group consisting of a Private Branch Exchange (PBX) network, a Public Switched Telephone Network (PSTN) and an Internet Protocol (IP)-based network.

6. The routing method based on call treatment options provided in a communications network environment as recited in claim 2, wherein said first communication device comprises a device selected from the group consisting of wireline telephones, wireless telephones, PBX digital phones, video phones, text messaging devices, and Voice-over-IP (VoIP) phones.

7. The routing method based on call treatment options provided in a communications network environment as recited in claim 2, wherein said second network comprises a Internet Protocol (IP)-based network.

8. A system for routing calls based on treatment options provided via instant messaging, comprising:
a plurality of phones forming a phone network, wherein a select phone is provided with an instant messaging call treatment function that transmits an instant message to a caller when said select phone is set to an unavailable status, said instant message including a set of call treatment options relative to an incoming call from said caller; and
a routing manager that is operable responsive to a reply instant message generated by said caller, said reply instant message including a particular call treatment option selected by said caller, wherein a forwarding command is provided by said routing manager to a switch associated with said phone network in accordance with said particular call treatment option selected by said caller.

9. The system for routing calls based on treatment options provided via instant messaging as recited in claim 8, wherein said phone network comprises a Private Branch Exchange (PBX) network and said switch for processing said forwarding command comprises a PBX switch.

10. The system for routing calls based on treatment options provided via instant messaging as recited in claim 8, wherein said call treatment options are based at least in part upon one of said incoming call's contents, said caller's identity, and time and date stamping data associated with said incoming call.

11. The system for routing calls based on treatment options provided via instant messaging as recited in claim 8, wherein said call treatment options are dynamically configurable.
